# EUROPEAN PATENT APPLICATION

(11) **EP 1 677 006 A2**
(43) Date of publication of application: **05.07.2006**
(21) Application number: 05381059.4
(22) Date of filing: 15.12.2005
(51) Int. Cl.: F03D 11/04, F03D 1/00

(54) **Wind turbine with detachable crane**

(30) Priority: 15.12.2004 ES 200402980
(71) Applicant: Gamesa Eolica, S.A. (Sociedad Unipersonal), 31013 Pamplona (Navarra) (ES)
(72) Inventor: José Ignacio, Llorente González, 31013 Pamplona (ES); Jesús, Zaldua Lasa, 31013 Pamplona (ES)

(57) **Abstract**

Wind turbine with detachable crane. Wind turbine with two anchoring places for a detachable, articulated boom-type crane, which allows from an initial securing point to provide maintenance service for the gearbox (30) and generator (31), and from the second securing point, to the rotor (42). At both anchoring places, the crane is mounted using the same boom (3), the same ties (14), the same load lifting cable (8) and the same motor unit, and it is configured with the required range in each case varying the adjustment cables (45) of the boom (3) and with a rotating or fixed support, respectively.

## Description

**FIELD OF THE INVENTION**

This invention refers to a wind turbine with a boom-type crane to enable maintenance work on its components.

**BACKGROUND TO THE INVENTION**

Electricity generating plants, particularly wind turbines, are sized to ensure their main components have a long working life, leading to the need for regular maintenance work on the parts subject to greatest wear and tear. Some of these components, particularly the generator, the gearbox and the rotor, are extremely heavy and therefore require the use of a crane for handling.

Bearing in mind the strict limitations regarding maintenance work, given that wind turbines are installed in tall towers and are, in general, built in solitary areas, the use of commercial cranes leads to problems of availability and cost.

Therefore, wind generators are now fitted with their own cranes to carry out maintenance work on their heavier components, without the need for outside means. Hence, a certain amount of background knowledge is available, as indicated below.

Document NL 1014553 describes a boom-type crane fitted to the outside of the nacelle of a wind turbine and secured using a tubular support. The problem with this crane is that it must be handled from the ground, as the nacelle casing makes its difficult for movements to be seen.

Document ES 2143652 describes a crane supported permanently at the same point on the floor of the wind turbine nacelle.

Documents EP 1101934 and EP 1284365 describe a crane with a different structure to the conventional boom-type cranes, which is able to reach different points of work by turning on its main horizontal axis, making correct positioning difficult.

Document WO 0234664 also describes a hoist that moves along a rail and lifts the machinery carrying out the maintenance work on the different parts of the wind turbine.

Finally, document DE 10028513 describes an auxiliary boom-type crane located on the wind turbine tower that helps an auto-crane which carries out the maintenance work on the wind turbine parts.

**SUMMARY OF THE INVENTION**

This invention proposes a conventional wind turbine with a boom-type crane, secured using cable ties, to handle its heavier parts located inside the nacelle and, more particularly, the full rotor, made up of the propellers and the hub (the component that turns the wind power into a turning movement of the main wind turbine shaft), the generator (the component that turns this turning movement into electricity) and the gearbox (a component for multiplying the revs of the main wind turbine shaft for greater generator supply) to enable maintenance work.

According to the invention, the wind turbine has an initial securing point for the crane to maintain the gearbox and generator, lifting them and lowering them off and onto the ground on the outside of the nacelle, and a second securing point for the crane to provide the same type of maintenance work for the rotor. The crane is fitted in both housings using the boom, the ties, the load hoisting cable and the motor unit located at the base of the tower that supports the wind turbine nacelle. To adapt to the different maintenance requirements of the gearbox, generator and rotor, boom adjustment cables of different lengths are used along with a fixed or turning support. In the event that the crane is being used to maintain the rotor, the crane support is made up of beams that are anchored to an appropriate place on the inside of the nacelle.

In the event that the crane is being used to maintain the gearbox and rotor, the crane support includes a turning device that is anchored to an appropriate place.

This invention is particularly aimed at wind turbines producing a power of 700-850 kw, with the following maximum weights of their main components:

- Gearbox: 6.6 t.

- Generator: 3.7 t.

- Rotor: 8.5 t.

An important characteristic of the invention is that all the crane components mounted on the nacelle weigh less than 150 Kg so that they can be hoisted using the maintenance boom installed on this type of wind turbine.

Other characteristics and advantages of this invention are indicated in the detailed description following the illustrations of its purpose in relation to the attached figures.

**DESCRIPTION OF THE FIGURES**

Figure 1 shows a general exploded view of the gearbox and generator maintenance crane.

Figure 2 shows a diagram of the gearbox and generator maintenance crane tower and a cross-section of its base.

Figure 3 shows a diagram of the support beams for the gearbox and generator maintenance crane.

Figure 4 shows a diagram of the boom for the gearbox and generator maintenance crane.

Figure 5 shows a diagram of the ties for the gearbox and generator maintenance crane.

Figure 6 shows a diagram of the cable rewind drum for the gearbox and generator maintenance crane.

Figure 7 shows a diagram of the stages of assembly for the boom of a gearbox and generator maintenance crane.

Figure 8 shows the two configurations of the gearbox and generator maintenance crane.

Figure 9 shows the gearbox lifting process.

Figure 10 shows the gearbox turning process.

Figure 11 shows the generator lifting process.

Figure 12 shows the generator turning process.

Figure 13 shows the wind turbine with the rotor maintenance crane.

Figure 14 shows the rotor maintenance crane support.

Figure 15 shows the return diagram of the rotor maintenance crane.

Figure 16 shows the assembly process for the boom on the rotor removal crane.

**DETAILED DESCRIPTION OF THE INVENTION**

**Gearbox and turbine maintenance crane**

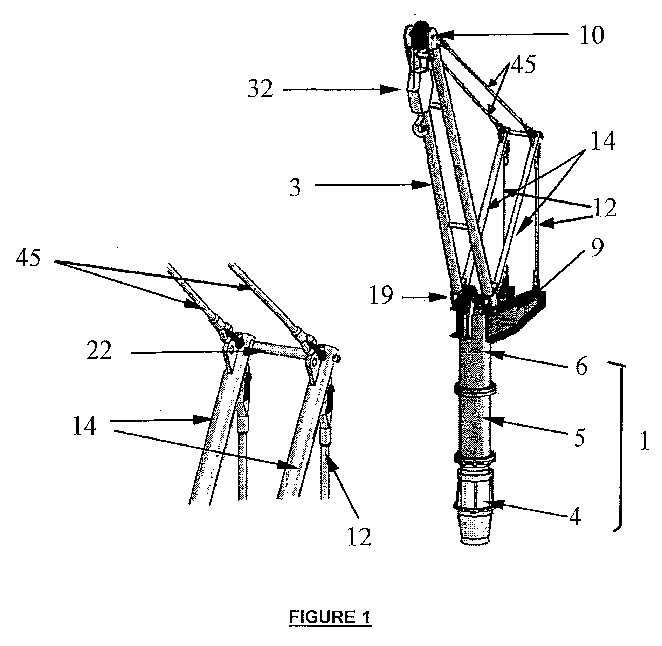

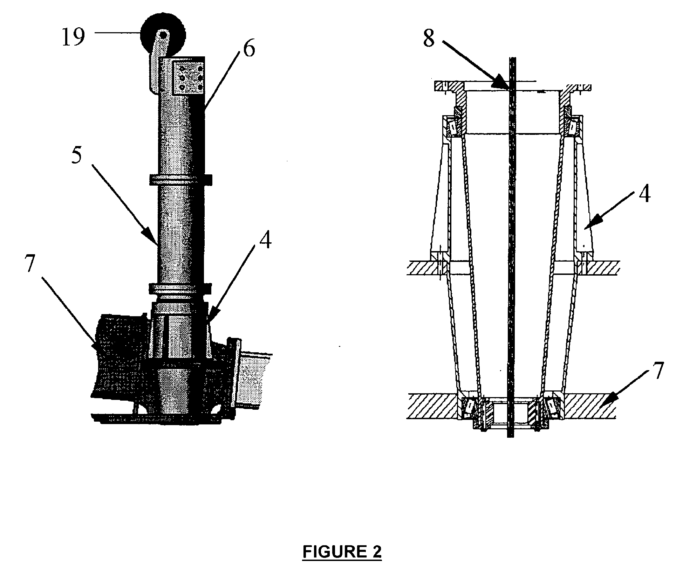

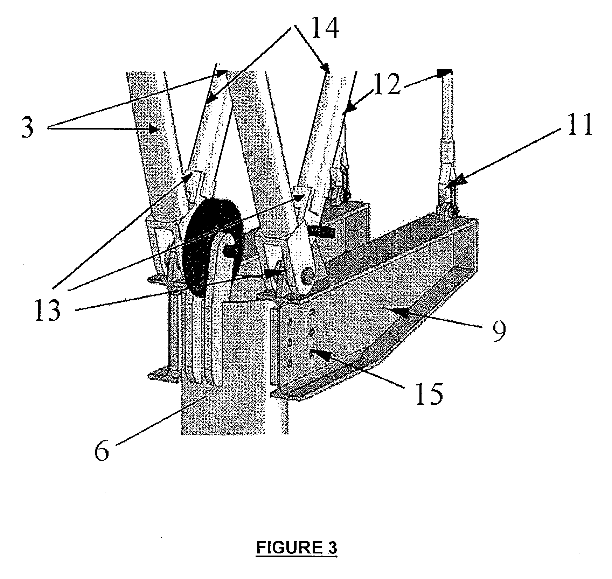

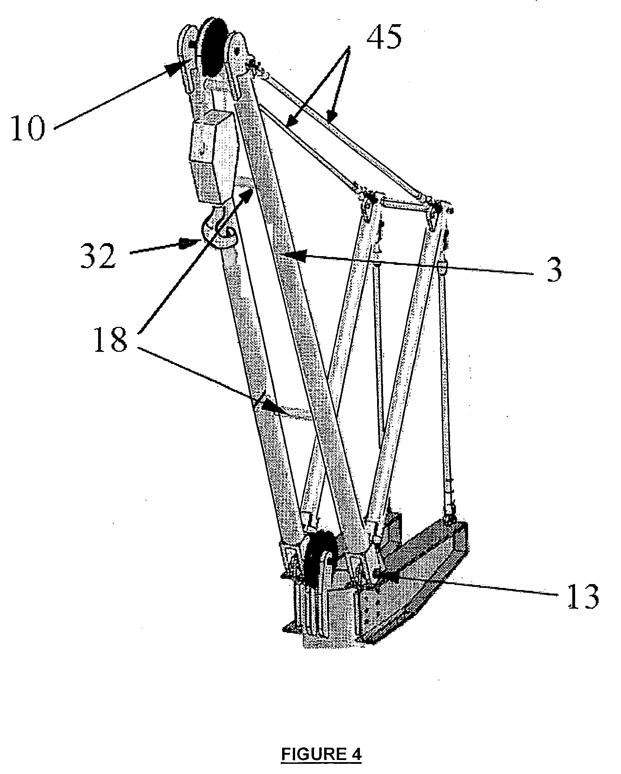

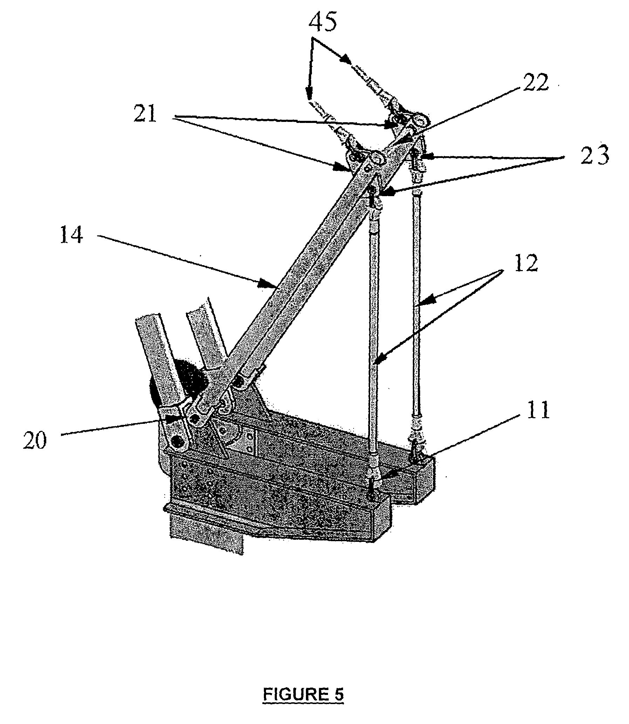

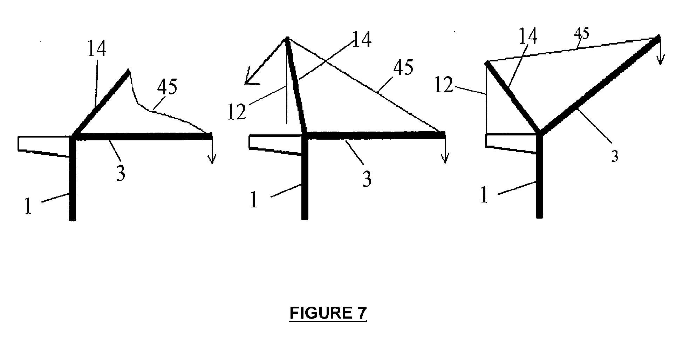

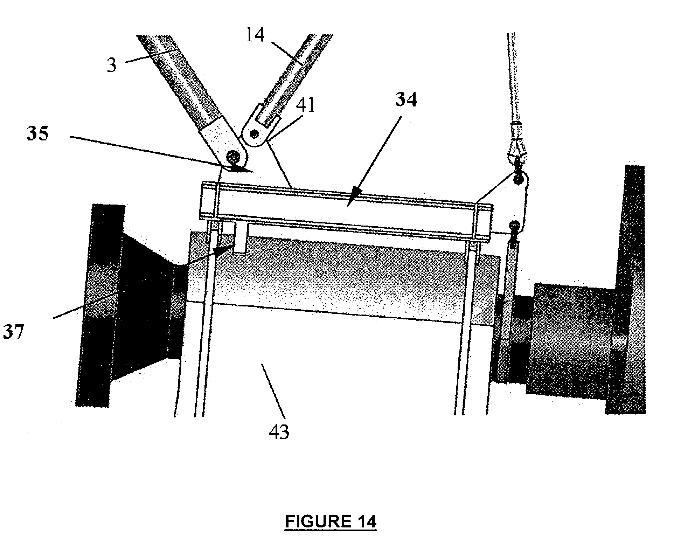

Firstly, in relation to Figures 1-14, the maintenance crane of generator 31 and gearbox 30 is described.

The crane consists of three main parts: the boom 3, the ties 14 and the supporting device made up of the tower 1 and the beams 9.

The tower 1 is responsible for lifting the crane high enough so that it can turn freely without interfering with the rest of the nacelle 20. In turn, it is divided into: base 4, column 5 and pedestal 6.

The base 4 of the tower 1 includes a turning device with an adapted fixed part that is screwed to the frame 7 and a moving part that turns either manually or assisted within the fixed part by means of a pair of tapered roller bearings. This moving part includes a braking element. Tower 1 is hollow, as the load lifting cable 8 running to the base of the wind turbine tower housing the motor unit with drum 25 must pass through the inside. The motor unit can also be installed inside the nacelle 20.

Column 5 is a shell that lengthens the distance between the base 4 and the pedestal 6. As preferred in the invention, column 5 is connected to base 4 and pedestal 6 using mating flanges.

Pedestal 6 of tower 1 is the part to which the supporting beams 9 are secured, to which the rest of the crane is attached. The load lifting cable 8 directing pulley 19 is also secured to pedestal 6.

The supporting beams 9, screwed at one end 15 to the pedestal 6, have lugs 11 at the other end for anchoring the vertical cables 12 and, on end 15, the housing 13 where the ends of the boom 3 and the ties 14 are bolted on.

Boom 3 is made up of two hollow tubes 16 and 17 and crossbars 18 that are welded so that boom 3 becomes a rigid structure. At one end of the boom 3 is the return pulley 10 and tubes 16 and 17 are bolted into the housing 13 of the supporting beams 9 at the other end .

The ties 14, which are unstable, are kept tight thanks to the weight of the boom 3 and the load hanging from the hook 32. Where there is no load, the structure folds onto itself when the adjustment cables 45 of the boom 3 and the vertical cables 12 are working under tension. This forms one of the main characteristics of the invention, as the crane components can be fitted folded and can then unfold before operating the crane, making crane assembly much easier and solving one of the greatest problems arising from the previous technique.

The ties 14 are secured at the top using a spacer 22 and have a couple of lugs 21 to secure the boom 3 adjustment cables 45 and a couple of lugs 23 to secure the vertical cables 12.

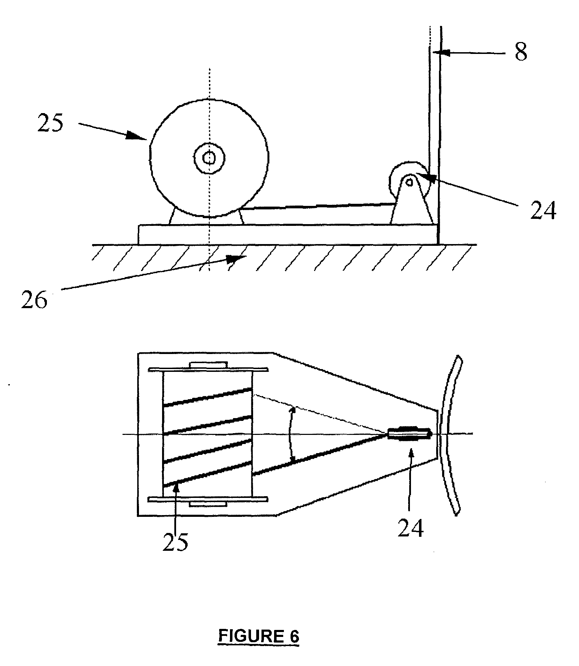

As seen in Figure 6, the load lifting cable 8 uses a pulley 24 fitted at the base of the wind turbine tower to avoid swinging when reaching the motor unit to lift the load, which includes drum 25, and is fixed to the ground using permanent foundations. The motor is fitted with an electro-mechanical brake to avoid problems of the load falling when there is no electricity supply to the motor.

All the crane components must be assembled by hand, combining this with the other work to be undertaken during each specific maintenance change. As seen in Figure 6, the generator 31 and gearbox 30 maintenance crane is assembled as follows:

a) The horizontal boom 3 is pre-assembled and the load lifting cable then fitted, after which the folded ties 14 are fitted and the boom 3 adjustment cables 45 are added.

b) The vertical cables 12 are pre-assembled and the structure is tightened, first by means of cables 45. The structure will now begin to reach to its final position.

c) When the boom 3 is in position, the vertical cables 12 are secured and the crane is then operational.

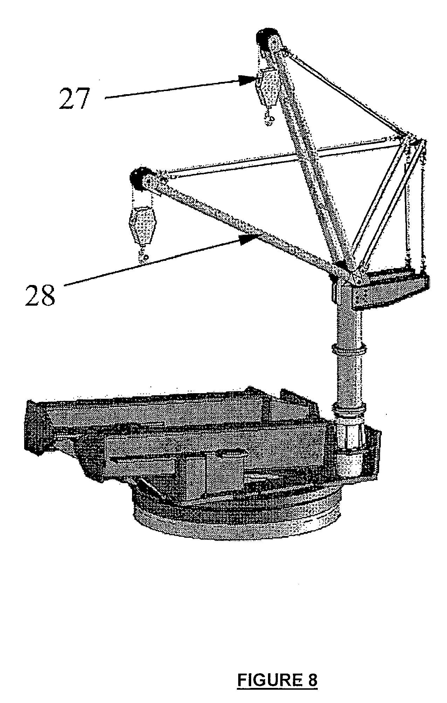

To ensure the required scope of the crane to remove the generator 31 and the gearbox 30, the invention provides the crane with two different configurations, indicated as numbers 27 and 28 on Figure 8 in which it can be seen that the crane can only adopt two configurations, determined only by the length of the boom adjustment cables 45. The vertical cables 12 are fitted with tensors for the fine adjustment of their length to ensure the crane adapts to the different types of gearboxes and generators.

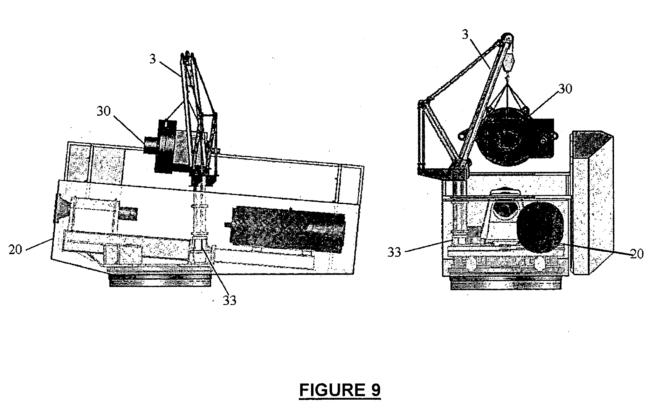

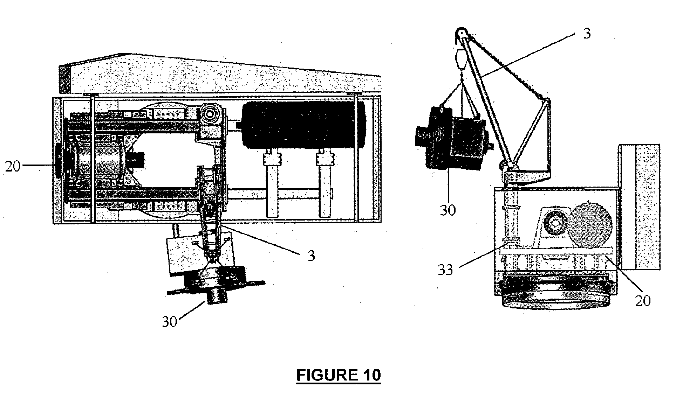

As seen in Figures 9 and 10, to remove the gearbox 30 the crane lifts the load so that gearbox 30 can be removed through the side of the nacelle 20 without hitting its wall or the crane boom 3. The crane is then turned outwards and the gearbox 30 is lowered to the ground by releasing the load lifting cable.

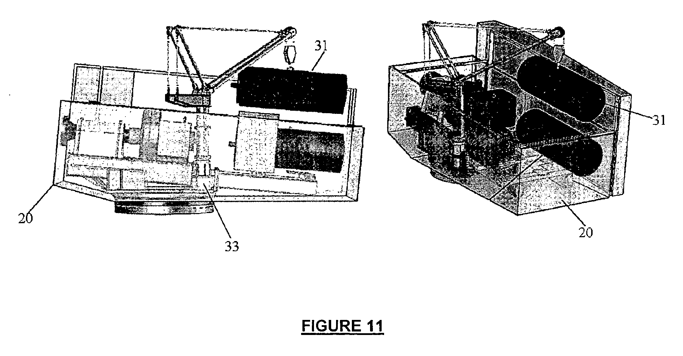

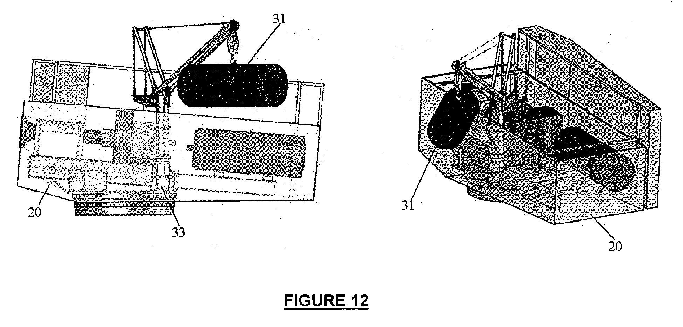

In Figures 11 and 12 it can be seen that, to remove the generator 31, it must be lifted high enough to be able to remove it on the side of the nacelle 20 without hitting its wall and the crane must then be turned outwards before lowering the generator 31 by releasing the load lifting cable.

In both cases, the crane is anchored to the nacelle 20 in the same place 33 from where the aforementioned operations can be carried out.

**Rotor maintenance crane**

Given that the housing 33 of the gearbox 30 and generator 31 maintenance crane is separate from the position of the rotor 42, the use of the same crane for maintenance service on the rotor 42 would mean that the crane used would be too large. Therefore, according to this invention, a suitable crane can be set up for maintenance service on the rotor 42 using several parts of the same crane used to maintain the gearbox 30 and the generator 31, more particularly the boom 3 and the ties 14.

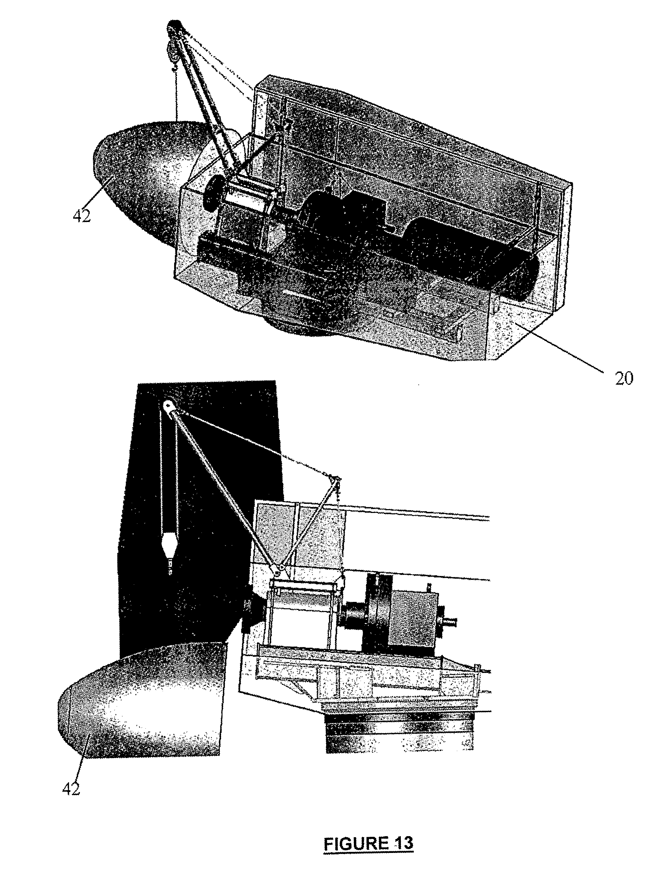

As can be seen in Figures 13-15, the rotor 42 maintenance crane is similar to that used to maintain the gearbox 30 and the generator 31, although it cannot turn and its movements are restricted to lowering and hoisting the load lifting cable.

The crane support is simpler and consists of crossbeams 34 with lugs 35 to bolt in the boom and lugs 41 to bolt in the ties 14. The support 34 is secured to the hoisting frame 43 by means of legs 37 at the bottom front of the beams and are screwed to flanges on the grooves of the hoisting frame 43.

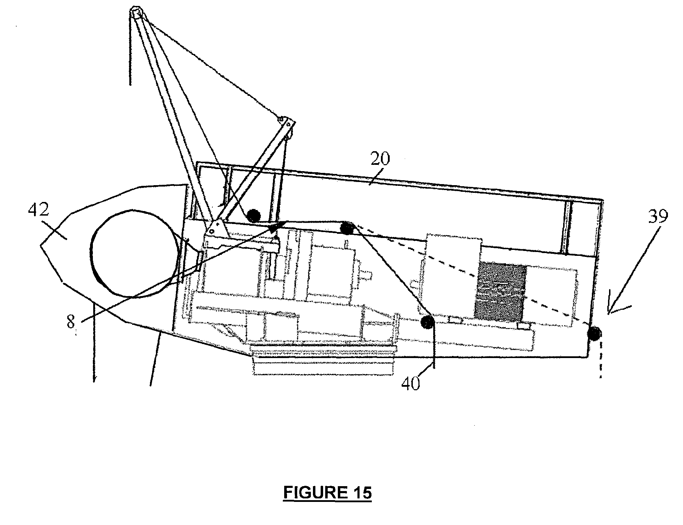

The return system used on this crane is indicated in Figure 15 in which the load lifting cable 8 is returned to the rear of the nacelle 20 and lowered to the base of the wind turbine base either through the rear door 39 of the nacelle or through a hole 40 made in its casing.

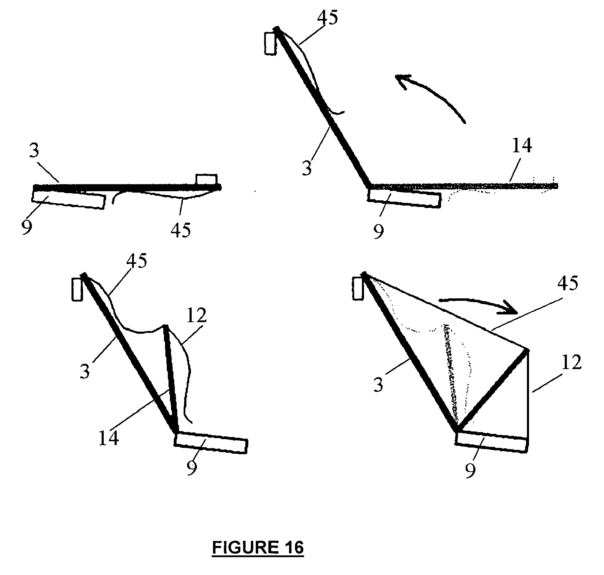

As seen in Figure 16, the different stages of assembling the rotor 42 removal crane are as follows:

a) First bolt the folded boom onto the nacelle 20 and secure the boom 3 adjustment cables 45.

b) Then the crane boom 3 is lifted.

c) The ties 14 are then fitted, securing them to the boom adjustment cable 45 and the vertical cables 12.

d) Finally the structure is tightened to its operating position so that the crane is fully operational.

In the preferential operations described, any modifications included within the scope defined by the following claims can be introduced.

## Claims

1. Wind turbine comprising a tower, a nacelle (20) housing a gearbox (30) and a generator (31) driven by a shaft coupled to a rotor (42) and a dismountable boom-type articulated crane comprising a support, a boom (3), ties (14), adjustment cables (45) on the boom (3), vertical cables (12) that support the ties (14), load lifting / lowering cable (8) driven by a motor unit located at the base of the tower, **characterised by**: a) The nacelle (20) on the wind turbine has an initial (33) securing point for the crane to maintain the gearbox (30) and generator (31), lifting them and lowering them off and onto the ground on the outside of the nacelle (20), and a second (43) securing point for the crane to provide the same type of maintenance work for the rotor (42). b) At both anchoring places (33, 43), the crane is mounted using the same boom (3), the same ties (14), the same load lifting cable (8) and the same motor unit and, to adapt to the different maintenance requirements of the gearbox (30), the generator (31) and the rotor (42), boom (15) adjustment cables (45) are used in each case with a different length and a fixed or turning support.

2. Wind turbine in accordance with Claim 1, **characterised by** when it is assembled to maintain the rotor (42), the crane support is made up of beams (34) anchored to the inside of the nacelle (20).

3. Wind turbine in accordance with Claim 1, **characterised by** when it is assembled to maintain the gearbox (30) and the generator (31), the crane support includes a turning device.

4. Wind turbine in accordance with Claim 3, **characterised by** the support is made up of a tower (1) with a base (4) anchored to the inside of the nacelle (20) that has a moving part that turns inside the fixed part by means of a pair of tapered roller bearings, and beams (9) screwed to the top end of the tower (1).

5. Wind turbine in accordance with Claim 1, **characterised by** the vertical cables (12) include tighteners that allow for slight changes to be made to the length.

6. Wind turbine in accordance with any of the previous claims, **characterised by** all the crane components assembled on the nacelle (20) weigh less than 150 Kg.
